# EUROPEAN PATENT SPECIFICATION

(11) **EP 4 251 545 B1**
(45) Date of publication and mention of the grant of the patent: **18.03.2026**
(21) Application number: 21816039.8
(22) Date of filing: 22.11.2021
(51) Int. Cl.: B65G 1/04

(54) **A REMOTELY OPERATED VEHICLE FOR HANDLING A STORAGE CONTAINER ON A RAIL SYSTEM OF AN AUTOMATED STORAGE AND RETRIEVAL SYSTEM**
EIN FERNGESTEUERTES FAHRZEUG ZUR HANDHABUNG EINES LAGERBEHÄLTERS AUF EINEM SCHIENENSYSTEM EINES AUTOMATISCHEN LAGER- UND BEDIENSYSTEMS
UN VÉHICULE TÉLÉCOMMANDÉ POUR MANIPULER UN CONTENEUR DE STOCKAGE SUR UN SYSTÈME FERROVIAIRE D'UN SYSTÈME DE STOCKAGE ET DE RÉCUPÉRATION AUTOMATISÉ

(30) Priority: 30.11.2020 NO 20201315; 30.11.2020 NO 20201317; 06.07.2021 NO 20210871
(43) Date of publication of application: 04.10.2023
(73) Proprietor: Autostore Technology AS, 5578 Nedre Vats (NO)
(72) Inventor: DJUVE, HEGGEBØ, Jørgen, 5580 ØLEN (NO)
(74) Representative: Kilburn & Strode LLP
(86) International application number: PCT/EP2021/082486
(87) International publication number: WO 2022/112166

(56) References cited:
- EP-A1- 3 040 237
- WO-A1-2019/076760
- WO-A1-2021/239515
- WO-A1-2022/008670
- CN-A- 113 213 045
- KR-A- 20180 121 582
- US-A1- 2018 305 124
- US-B2- 10 046 912

## Description

The present invention relates to a remotely operated vehicle for handling an object, e.g. a storage container, in particular to a remotely operated vehicle comprising a mass balancing system. The invention further relates to a method for operating a remotely operated vehicle.

### BACKGROUND AND PRIOR ART

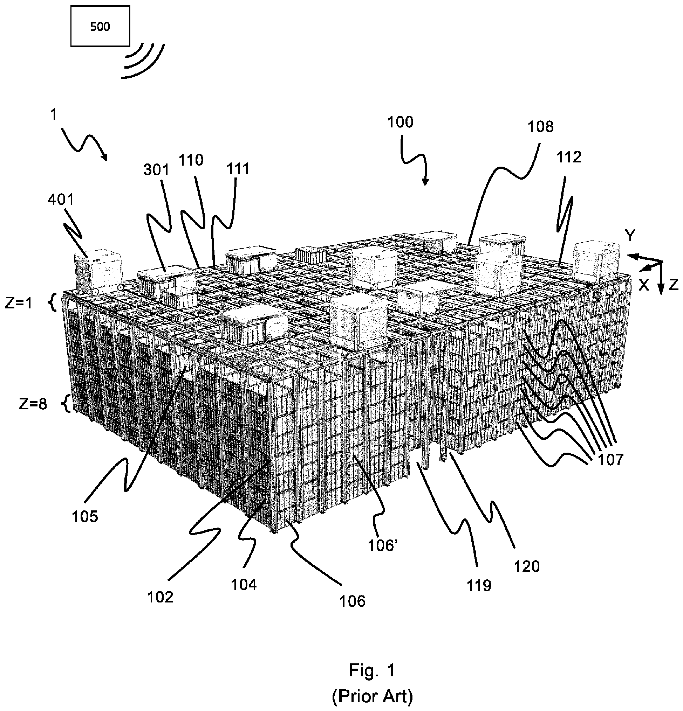

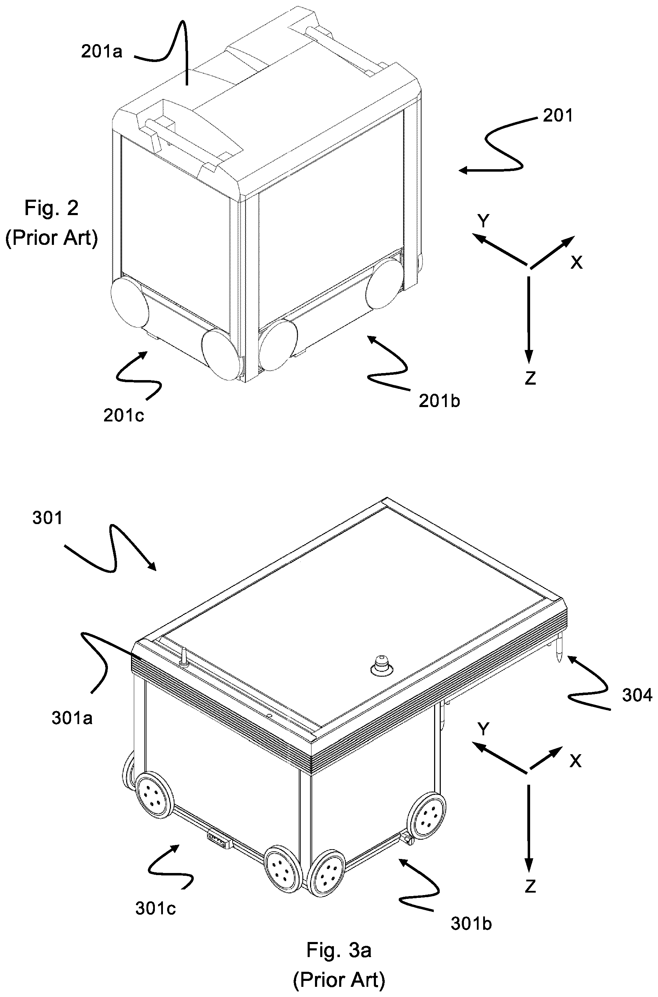

Fig. 1 discloses a prior art automated storage and retrieval system 1 with a framework structure 100 and Figs. 2, 3a-3b disclose three different prior art container handling vehicles 201, 301, 401 suitable for operating on such a system 1.

The framework structure 100 comprises upright members 102 and a storage volume comprising storage columns 105 arranged in rows between the upright members 102. In these storage columns 105 storage containers 106, also known as bins, are stacked one on top of one another to form container stacks 107. The members 102 may typically be made of metal, e.g. extruded aluminum profiles.

The framework structure 100 of the automated storage and retrieval system 1 comprises a two-dimensional rail system 108 arranged across the top of framework structure 100, on which rail system 108 a plurality of container handling vehicles 301, 401 may be operated to raise storage containers 106 from, and lower storage containers 106 into, the storage columns 105, and also to transport the storage containers 106 above the storage columns 105. The rail system 108 comprises a first set of parallel rails 110 arranged to guide movement of the container handling vehicles 301, 401 in a first direction *X* across the top of the frame structure 100, and a second set of parallel rails 111 arranged perpendicular to the first set of rails 110 to guide movement of the container handling vehicles 301, 401 in a second direction *Y* which is perpendicular to the first direction *X.* Containers 106 stored in the columns 105 are accessed by the container handling vehicles 301, 401 through access openings 112 in the rail system 108. The container handling vehicles 301, 401 can move laterally above the storage columns 105, i.e. in a plane which is parallel to the horizontal *X-Y* plane.

The upright members 102 of the framework structure 100 may be used to guide the storage containers during raising of the containers out from and lowering of the containers into the columns 105. The stacks 107 of containers 106 are typically self-supportive.

Each prior art container handling vehicle 201, 301, 401 comprises a vehicle body 201a, 301a, 401a and first and second sets of wheels 201b, 201c, 301b, 301c, 401b, 401c which enable lateral movement of the container handling vehicles 201, 301, 401 in the *X* direction and in the *Y* direction, respectively. In Figs. 2-3b, two wheels in each set are fully visible. The first set of wheels 201b, 301b, 401b is arranged to engage with two adjacent rails of the first set 110 of rails, and the second set of wheels 201c, 301c, 401c is arranged to engage with two adjacent rails of the second set 111 of rails. At least one of the sets of wheels 201b, 201c, 301b, 301c, 401b, 401c can be lifted and lowered, so that the first set of wheels 201b, 301b, 401b and/or the second set of wheels 201c, 301c, 401c can be engaged with the respective set of rails 110, 111 at any one time.

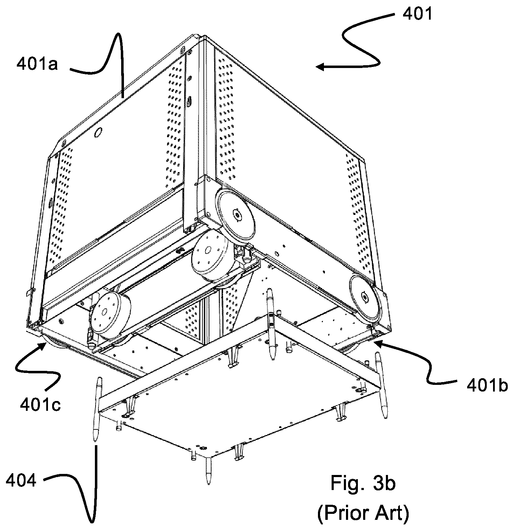

Each prior art container handling vehicle 201, 301, 401 also comprises a lifting device for vertical transportation of storage containers 106, e.g. raising a storage container 106 from, and lowering a storage container 106 into, a storage column 105. The lifting device comprises one or more gripping/engaging devices which are adapted to engage a storage container 106, and which gripping/engaging devices can be lowered from the vehicle 201, 301, 401 so that the position of the gripping/engaging devices with respect to the vehicle 201, 301, 401 can be adjusted in a third direction *Z* (visible for instance in Fig. 1) which is orthogonal the first direction *X* and the second direction Y. Parts of the gripping device of the container handling vehicles 301, 401 are shown in Figs. 3a and 3b indicated with reference number 304, 404. The gripping device of the container handling device 201 is located within the vehicle body 201a in Fig. 2.

Conventionally, and also for the purpose of this application, *Z*=1 identifies the uppermost layer available for storage containers below the rails 110, 111, i.e. the layer immediately below the rail system 108, *Z*=2 the second layer below the rail system 108, *Z*=3 the third layer etc. In the exemplary prior art disclosed in Fig. 1, *Z*=8 identifies the lowermost, bottom layer of storage containers. Similarly, *X=*1*...n* and *Y*=1*...n* identifies the position of each storage column 105 in the horizontal plane. Consequently, as an example, and using the Cartesian coordinate system *X, Y, Z* indicated in Fig. 1, the storage container identified as 106' in Fig. 1 can be said to occupy storage position *X*=17, *Y=*1, *Z*=6. The container handling vehicles 201, 301, 401 can be said to travel in layer *Z*=0, and each storage column 105 can be identified by its *X* and *Y* coordinates. Thus, the storage containers shown in Fig. 1 extending above the rail system 108 are also said to be arranged in layer *Z*=0.

The storage volume of the framework structure 100 has often been referred to as a grid 104, where the possible storage positions within this grid are referred to as storage cells. Each storage column may be identified by a position in an *X-* and *Y-*direction, while each storage cell may be identified by a container number in the *X-, Y-* and *Z*-direction.

Each prior art container handling vehicle 201, 301, 401 comprises a storage compartment or space for receiving and stowing a storage container 106 when transporting the storage container 106 across the rail system 108. The storage space may comprise a cavity arranged internally within the vehicle body 201a as shown in Figs. 2 and 3b and as described in e.g. WO2015/193278A1 and WO2019/206487A1.

Fig. 3a shows an alternative configuration of a container handling vehicle 301 with a cantilever construction. Such a vehicle is described in detail in e.g. NO317366.

The cavity container handling vehicles 201 shown in Fig. 2 may have a footprint that covers an area with dimensions in the X and Y directions which is generally equal to the lateral extent of a storage column 105, e.g. as is described in WO2015/193278A1.

The term 'lateral' used herein may mean 'horizontal'.

Alternatively, the cavity container handling vehicles 401 may have a footprint which is larger than the lateral area defined by a storage column 105 as shown in Fig. 3b and as disclosed in WO2014/090684A1 or WO2019/206487A1.

The rail system 108 typically comprises rails with grooves in which the wheels of the vehicles run. Alternatively, the rails may comprise upwardly protruding elements, where the wheels of the vehicles comprise flanges to prevent derailing. These grooves and upwardly protruding elements are collectively known as tracks. Each rail may comprise one track, or each rail may comprise two parallel tracks; in other rail systems 108, each rail in one direction may comprise one track and each rail in the other perpendicular direction may comprise two tracks.

WO2018/146304A1 illustrates a typical configuration of rail system 108 comprising rails and parallel tracks in both *X* and *Y* directions.

In the framework structure 100, a majority of the columns 105 are storage columns 105, i.e. columns 105 where storage containers 106 are stored in stacks 107. However, some columns 105 may have other purposes. In Fig. 1, columns 119 and 120 are such special-purpose columns used by the container handling vehicles 201, 301, 401 to drop off and/or pick up storage containers 106 so that they can be transported to an access station (not shown) where the storage containers 106 can be accessed from outside of the framework structure 100 or transferred out of or into the framework structure 100. Within the art, such a location is normally referred to as a 'port' and the column in which the port is located may be referred to as a 'port column' 119,120. The transportation to the access station may be in any direction, that is horizontal, tilted and/or vertical. For example, the storage containers 106 may be placed in a random or a dedicated column 105 within the framework structure 100, then picked up by any container handling vehicle and transported to a port column 119, 120 for further transportation to an access station. The transportation from the port to the access station may require movement along various different directions, by means such as delivery vehicles, trolleys or other transportation lines. Note that the term 'tilted' means transportation of storage containers 106 having a general transportation orientation somewhere between horizontal and vertical.

In Fig. 1, the first port column 119 may for example be a dedicated drop-off port column where the container handling vehicles 201, 301 can drop off storage containers 106 to be transported to an access or a transfer station, and the second port column 120 may be a dedicated pick-up port column where the container handling vehicles 201, 301, 401 can pick up storage containers 106 that have been transported from an access or a transfer station.

The access station may typically be a picking or a stocking station where product items are removed from or positioned into the storage containers 106. In a picking or a stocking station, the storage containers 106 are normally not removed from the automated storage and retrieval system 1, but are, once accessed, returned into the framework structure 100. A port can also be used for transferring storage containers to another storage facility (e.g. to another framework structure or to another automated storage and retrieval system), to a transport vehicle (e.g. a train or a lorry), or to a production facility.

A conveyor system comprising conveyors is normally employed to transport the storage containers between the port columns 119, 120 and the access station.

If the port columns 119, 120 and the access station are located at different levels, the conveyor system may comprise a lift device with a vertical component for transporting the storage containers 106 vertically between the port column 119, 120 and the access station.

The conveyor system may be arranged to transfer storage containers 106 between different framework structures, e.g. as is described in WO2014/075937A1.

When a storage container 106 stored in one of the columns 105 disclosed in Fig. 1 is to be accessed, one of the container handling vehicles 201, 301, 401 is instructed to retrieve the target storage container 106 from its position and transport it to the drop-off port column 119. This operation involves moving the container handling vehicle 201, 301 to a location above the storage column 105 in which the target storage container 106 is positioned, retrieving the storage container 106 from the storage column 105 using the container handling vehicle's 201, 301, 401 lifting device (not shown), and transporting the storage container 106 to the drop-off port column 119.

If the target storage container 106 is located deep within a stack 107, i.e. with one or a plurality of other storage containers 106 positioned above the target storage container 106, the operation also involves temporarily moving the above-positioned storage containers prior to lifting the target storage container 106 from the storage column 105. This step, which is sometimes referred to as "digging" within the art, may be performed with the same container handling vehicle that is subsequently used for transporting the target storage container to the drop-off port column 119, or with one or a plurality of other cooperating container handling vehicles. Alternatively, or in addition, the automated storage and retrieval system 1 may have container handling vehicles 201, 301, 401 specifically dedicated to the task of temporarily removing storage containers 106 from a storage column 105. Once the target storage container 106 has been removed from the storage column 105, the temporarily removed storage containers 106 can be repositioned into the original storage column 105. However, the removed storage containers 106 may alternatively be relocated to other storage columns 105.

When a storage container 106 is to be stored in one of the columns 105, one of the container handling vehicles 201, 301, 401 is instructed to pick up the storage container 106 from the pick-up port column 120 and transport it to a location above the storage column 105 where it is to be stored. After storage containers 106 positioned at or above the target position within the stack 107 have been removed, the container handling vehicle 201, 301, 401 positions the storage container 106 at the desired position. The removed storage containers 106 may then be lowered back into the storage column 105 or relocated to other storage columns 105.

For monitoring and controlling the automated storage and retrieval system 1, e.g. monitoring and controlling the location of respective storage containers 106 within the framework structure 100, the content of each storage container 106 and the movement of the container handling vehicles 201, 301, 401 so that a desired storage container 106 can be delivered to the desired location at the desired time without the container handling vehicles 201, 301, 401 colliding with each other, the automated storage and retrieval system 1 comprises a control system 500 (shown in Fig. 1) which typically is computerized and which typically comprises a database for keeping track of the storage containers 106.

In the related context, in a highly automated environment of a modern storage and retrieval system 1, the conventional container handling vehicles perform well when it comes to the standardized tasks of digging for a specified storage container and/or efficiently moving along the rail system without colliding with another vehicle. However, there are still drawbacks associated with container handling vehicles of the prior art when it comes to reducing further the occurrence of unlikely incidents, for instance in connection with the handling of the storage container.

WO2019172824 discloses a cargo handling vehicle for handling large cargo such as freight containers within narrow aisles. The vehicle has means for autonomous navigation, an elongate chassis with two pairs of steerable wheels engaging with a floor surface. Length of the wheelbase can be altered. A telescopic, lifting boom provided on the chassis and extending in the extension direction of the chassis is also disclosed. The boom is provided with a lifting unit for handling the freight container. Different methods/devices aiming to enhance the stability of the cargo handling vehicle are disclosed.

WO2019076760 discloses a container handling system with a one-way port access vehicle. The vehicle can only move in one direction and may comprise picking devices pivotable in opposite directions so as to balance the weights while the port access vehicle handles containers.

In EP3040237 a transport machine is provided with a traveling device, a vehicle body, a vessel, a support device and a load detection device. At least a portion of the vehicle body is arranged above the traveling device. The vessel is provided on the vehicle body. The support device includes a slide mechanism that moves the vessel in a lateral direction with respect to the vehicle body, the lateral direction intersecting with a traveling direction of the traveling device when the transport machine travels straight. The load detection device detects a state of a load on the vessel. The slide mechanism is controlled based on a result of detection by the load detection device.

KR20180121582, which the EPO identified in the examination procedure as the "closest prior art" in relation to claim 1, describes, according to a machine translation of its abstract, a conveying system comprising a plurality of first rails (9) and a plurality of second rails (11), a running rail (4) in which the plurality of first rails (9) and the plurality of second rails (11) are arranged in a grid shape on the same surface, a running section (24) that can run on the running rail (4) in a first direction and a second direction, and a transfer section (26) that includes a holding section (46A) that holds a carrier (50) and an elevating section (45) that elevates the holding section (46A), and the running rail (4) is configured such that the carriage (8) can enter a first stop position where the transfer section (26) is arranged directly above each transfer port in a first processing device group that performs processing in a predetermined process, and further, from the first stop position to a second stop position where the transfer section (26) is arranged directly above each transfer port in a second processing device group that performs processing in a process different from the predetermined process. It is positioned so that a bogie (8) can enter. KR20180121582 also describes, according to a machine translation of its description, that the carriage (8) has a counterweight (49). The counterweight (49) is provided in the running section (24). The counterweight (49) has a function of cancelling a moment of a force applied to the wheel (32) from the holding member (26). The counterweight holds the centre of gravity of the carriage within a range surrounded by the plurality of wheels.

In view of all of the above it is desirable to provide a remotely operated vehicle that solves or at least mitigates one or more of the aforementioned problems belonging to the prior art, in a simple manner.

### SUMMARY OF THE INVENTION

The present invention is set forth and characterized in the independent claims, while the dependent claims describe other characteristics of the invention.

First aspect of the invention relates to a remotely operated vehicle for handling a storage container or a further vehicle, said remotely operated vehicle working on a rail system of an automated storage and retrieval system, said rail system comprising a first set of parallel rails and a second set of parallel rails arranged perpendicular to the first set of parallel rails, said remotely operated vehicle comprising a first set of wheels being arranged to engage with two adjacent rails of the first set of rails and a second set of wheels being arranged to engage with two adjacent rails of the second set of rails, said vehicle further comprising a mass balancing system comprising a balance weight, said mass balancing system being configured to purposely displace the balance weight in order to improve stability of the remotely operated vehicle.

By providing a remotely operated vehicle in accordance with the first aspect of the invention, it becomes possible to compensate for changes intrinsically occurring in the system, for instance, external, vehicle-related events such as the vehicle engaging and/or lifting the storage container. In addition, it also becomes possible to fend-off unexpected disturbances occurring during vehicle operation, for instance, loss of wheel traction, or presence of non-uniformly loaded storage containers. More specifically, the dedicated balance weight acts like a displaceable counterweight and is used to suitably reposition center of gravity of the vehicle and/or the vehicle/storage container assembly in response to vehicle-related events as exemplified above. By dynamically adjusting said center of gravity, the stability of the vehicle and/or the vehicle/storage container assembly is improved. In consequence, risk of malfunction, such as standstill on the rail system or a dropped storage container, is reduced.

The proposed solution is universal and applicable in remotely operated vehicles of different types, for instance in cantilever-based vehicles. In the context of cantilever-based vehicles, the system of the present invention is particularly useful to address issues arising in connection with lifting of the storage container, such as torque being exerted on the cantilever section of the vehicle and/or tipping up of the vehicle.

The proposed solution might also be employed for vehicles having a central cavity, particularly in order to distribute the load associated with the storage container so as to achieve a more even weight distribution at the wheels.

Moreover, the invention may also be employed if remotely operated vehicle has an adjustable footprint or is a harvester unit for the automated storage and retrieval system. Furthermore, the invention may be used in the context of service vehicles having the purpose of removing crashed remotely operated vehicles off the rail system.

Second aspect of the invention relates to a method for operating a remotely operated vehicle having a mass balancing system comprising a balance weight according to claim 13.

The relative terms "upper", "lower", "below", "above", "higher" etc. shall be understood in their normal sense and as seen in a Cartesian coordinate system. When mentioned in relation to a two-dimensional rail system, "upper" or "above" shall be understood as a position closer to the surface rail system (relative to another component), contrary to the terms "lower" or "below" which shall be understood as a position further away from the rail system (relative another component).

### BRIEF DESCRIPTION OF THE DRAWINGS

Following drawings are appended to facilitate the understanding of the invention. The drawings show embodiments of the invention, which will now be described by way of example only, where:
Fig. 1 is a perspective view of a framework structure of a prior art automated storage and retrieval system.
Fig. 2 is a perspective view of a prior art container handling vehicle having a centrally arranged cavity for carrying storage containers therein.
Fig. 3a is a perspective view of a prior art container handling vehicle having a cantilever for carrying storage containers underneath.
Fig. 3b is a perspective view, seen from below, of a prior art container handling vehicle having an internally arranged cavity for carrying storage containers therein.
Fig. 4a shows an example of a remotely operated vehicle with a cantilever design and having a mass balancing system according to an embodiment of the present invention.
Fig. 4b shows an example of a remotely operated vehicle having a mass balancing system according to another embodiment of the present invention.
Figs. 5a-5c show another example of a remotely operated vehicle with a cantilever design and having a mass balancing system according to an embodiment of the present invention.
Fig. 6 is a perspective view of a remotely operated vehicle having a mass balancing system according to an embodiment of the present invention.
Figs. 7a-7c show an example of a further remotely operated vehicle with a mass balancing system according to an embodiment of the present invention.
Figs. 8a-8b show an example of a yet another remotely operated vehicle with a mass balancing system according to an embodiment of the present invention.
Figs. 9a-9b show an example of a remotely operated vehicle with a central cavity and having a mass balancing system according to an embodiment of the present invention.
Fig. 10 is a graph visualizing motor torque associated with wheels of a remotely operated vehicle.

### DETAILED DESCRIPTION OF THE INVENTION

In the following, embodiments of the invention will be discussed in more detail with reference to the appended drawings. It should be understood, however, that the drawings are not intended to limit the invention to the subject-matter depicted in the drawings.

The framework structure 100 of the automated storage and retrieval system 1 is constructed in accordance with the prior art framework structure 100 described above in connection with Figs. 1-3b, i.e. a number of upright members 102, wherein the framework structure 100 also comprises a first, upper rail system 108 in the X direction and Y direction.

The framework structure 100 further comprises storage compartments in the form of storage columns 105 provided between the members 102 where storage containers 106 are stackable in stacks 107 within the storage columns 105. Storage containers 106 serve as goods holders, where goods, by way of example, may be groceries, clothes or car parts.

The framework structure 100 can be of any size. In particular, it is understood that the framework structure can be considerably wider and/or longer and/or deeper than disclosed in Fig. 1. For example, the framework structure 100 may have a horizontal extent of more than 700x700 columns and a storage depth of more than twelve containers.

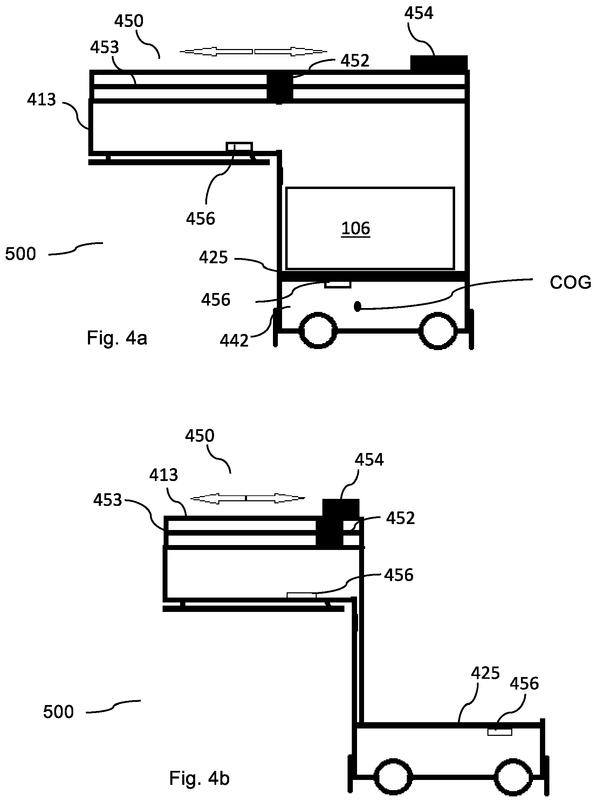

Various aspects of the present invention will now be discussed in more detail by way of example only and with reference to Figs. 4a-10.

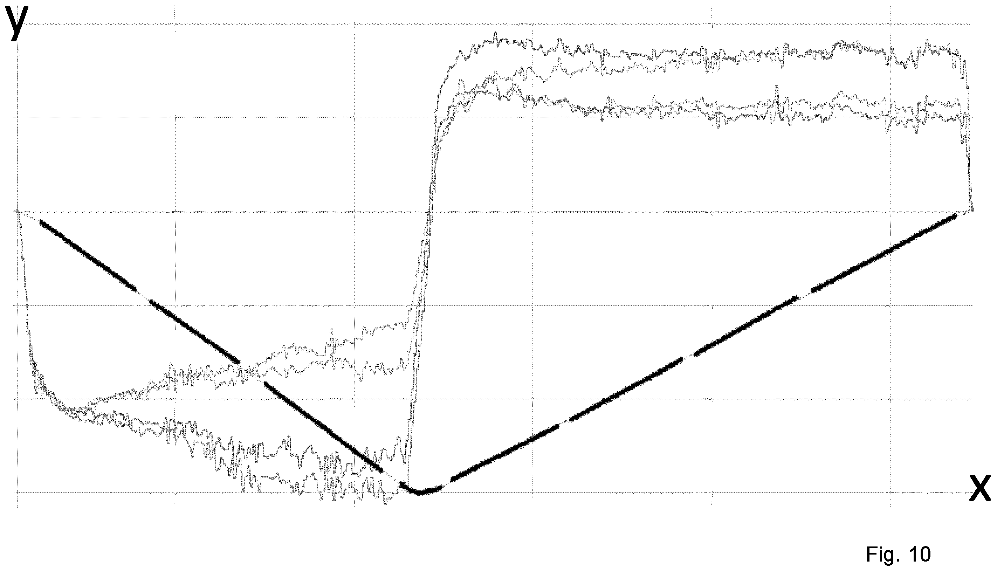

Turning first to Fig. 10, it is a graph visualizing effects occurring in connection with conventional container handling vehicles. More specifically, Fig. 10 is a visualization of behavior of motor torque associated with wheels (all wheels are driving) of a vehicle when moving in a certain horizontal direction. X-axel represents time and y-axel represents acceleration. The dashed line represents vehicle velocity. Here, the velocity increases in the first section of the graph, up to the kink, whereupon it steadily decreases. Accordingly, the vehicle accelerates in the first section of the graph and decelerates in the second section of the graph. Motor torque associated with each wheel is represented by a curve. As easily seen, front wheels (represented by two upper curves) experience reduced motor torque during acceleration phase when compared to rear wheel. This is in consequence of partial loss of wheel traction at the front wheels. As will be discussed in the following, this effect may be counteracted by suitably repositioning balance weight. Still with reference to Fig. 10, the difference between motor torques of front and rear wheels is significantly reduced in deceleration phase.

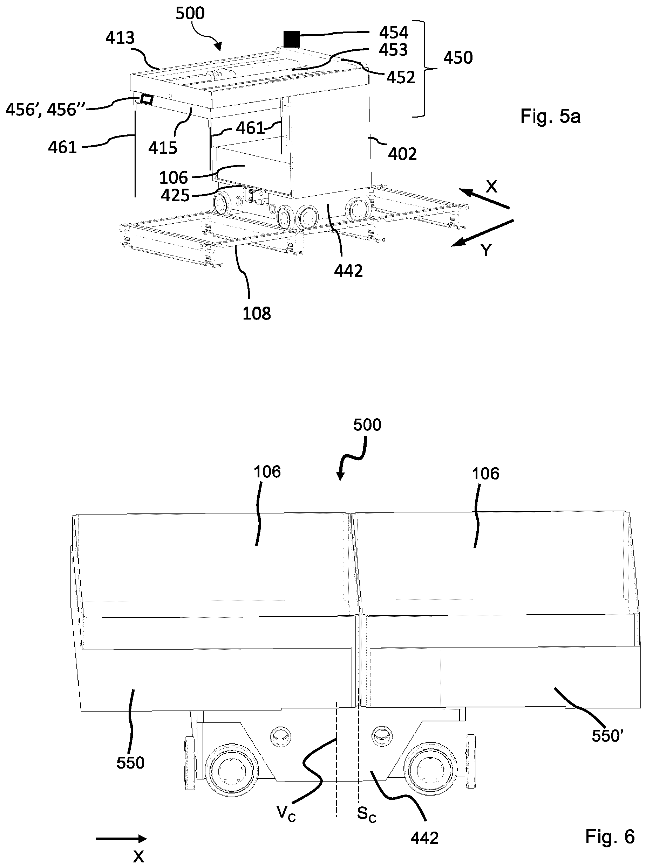

Fig. 4a shows an example of a remotely operated vehicle 500 with a cantilever design and having a mass balancing system 450 according to a preferred embodiment of the present
invention. Shown vehicle 500 comprises a support surface 425 displaceable in a horizontal direction. A container 106 is positioned on the support surface 425. A balance weight 452 is arranged in an upper portion of the vehicle 500 and is displaceable along the whole length of said vehicle 500, corresponding to a total length of a wheeled base 442 and a cantilever section 413, in a direction denoted by arrows. The remotely operated vehicle 500 of Fig. 4a further comprises a sensor 456 for measuring weight of any storage container(s) 106 engaged by the remotely operated vehicle 500 by means of a lifting frame 415 or supported by the support surface 425. In one embodiment, the sensor 456 is a suitably positioned load cell. The weight of the storage container 106 engaged by the remotely operated vehicle 500 could also be determined indirectly, for instance by deriving necessary information from the tension force acting on each of the lifting bands (discussed in connection with Fig. 5a). In yet another embodiment, the aggregated weight of the container 106 and its content is known for all containers of the storage and retrieval system.

A control system 454 may be connected to both sensors 456 and the balance weight 452 and a balance weight displacing device 453. The control system 454 may, based on the measured data received from the sensors 456, calculate a new position for the balance weight 452 and instruct the balance weight displacing device 453 to displace the balance weight 452 to said new position. Such measured data received from the sensors 456 typically indicates that a shift in a center of gravity COG of the vehicle 500 has occurred in consequence of a storage container 106 being engaged by the remotely operated vehicle 500. The balance weight 452 is then displaced to a new position to improve stability of the vehicle/container assembly, for instance to prevent tilting of the vehicle 500. For a particular remotely operated vehicle 500, the original position of its center of gravity COG is dependent on the general shape of the vehicle 500 and the quantum and weight of its components. Analogously, the weight of the balance weight typically depends on the weight and type of the particular remotely operated vehicle 500. With reference to Fig. 4a and Fig. 10, on a general level, the displacement cycle of the balance weight 452 may be preprogrammed in order to counter known future changes associated with a vehicle 500, such as acceleration/deceleration and or change of direction. Notwithstanding this, the control system 454 is also capable of countering relevant unexpected events occurring while vehicle is in operation.

Fig. 4b shows an example of a remotely operated vehicle 500 having a mass balancing system 450 according to another preferred embodiment of the present invention. The balance weight 452 in Fig. 4b is arranged in an upper portion of a cantilever section 413 and is displaceable along an extent equal to the length of the cantilever section 413 in a direction denoted by arrows. The remotely operated vehicle 500 of Fig. 4b is Z-shaped and has a linearly movable support surface 425. The function of the mass balancing system 450 with sensors 456 and a control system 454 for a balance weight displacing device 453 is similar to the function already described in relation to Fig. 4a and will not be repeated herein.

Figs. 5a-5c show another example of a remotely operated vehicle 500 with a cantilever design and having a mass balancing system 450 according to an embodiment of the present invention. The remotely operated vehicle 500 has a through-going opening in a support section 402. A support surface 425 is linearly movable relative a wheeled base 442 between a position directly above the wheeled base 442 and a position directly below a lifting frame 415. The vehicle 500 in Figs. 5a-5c has similar features as the remotely operated vehicle shown and described in relation to Figs. 4a-4b with the exception that the container handling vehicle 500 of Figs. 5a-5c has walls and a cover surrounding the support surface 425 when the support surface 425 is directly above the wheeled base 442. General effects and advantages discussed in conjunction with Figs. 4a-4b may also be attributed to the solution presented in Figs. 5a-5b.

Fig. 5a is a front perspective view showing a storage container 106 arranged on a support surface 425 positioned directly above the wheeled base 442. The remotely operated vehicle 500 is suitable for handling a storage container 106 on a two-dimensional rail system 108 of an automated storage and retrieval system shown in Fig. 1.

In a cantilever section 413, a mass balancing system 450 is disclosed. A balance weight 452 of Fig. 5a is arranged in an upper portion of the remotely operated vehicle 500 and is displaceable along the whole length of the container handling vehicle 500, corresponding to a total length of the wheeled base 442 and the cantilever section 413. A control system 454 for a balance weight displacing device 453 as described in relation to Fig. 4b above is also shown. Said control system 454 detects potential changes/imbalances in the vehicle's 500 center of gravity (shown in Fig. 4a) and dynamically responds when these exceed a threshold that might affect important parameters such as traction, true running of the vehicle on the rail system 108 or operation of the vehicle's lifting frame 415. The control system 454 responds by purposely displacing the balance weight 452 by means of a balance weight displacing device 453. More specifically, the balance weight 452 acts like a counterweight and is used to suitably reposition center of gravity of the vehicle and/or the vehicle/storage container assembly in response to vehicle-related events as exemplified above. By dynamically adjusting said center of gravity, the stability of the vehicle and/or the vehicle/storage container assembly is improved. In consequence, risk of malfunction, such as standstill on the rail system 108 or a dropped storage container, is significantly reduced.

Said changes/imbalances in relation to vehicle's 500 center of gravity COG could for instance occur in response to the storage container 106 being engaged and/or lifted by the vehicle 500. Without the mass balancing system 450, lifting of the storage container 106 could cause tilting of the vehicle 500. Tilting of the vehicle 500 could also occur in consequence of acceleration or deceleration of the vehicle. By way of example, further events resulting in change of vehicle's 500 center of gravity and, consequently, triggering displacing of the balance weight 452 by means of a balance weight displacing device 453, are loss of wheel traction, due to malfunction of wheel(s) or wheel axis, or engagement with non-uniformly loaded storage containers.

As discussed above in conjunction with Fig. 4a, the mass balancing system 450 could comprise a sensor for measuring weight of a storage container 106. In addition, the system could comprise a further sensor 456' for determining position on the rail system 108 of the storage container 106 engaged by the vehicle 500. In particular, the vertical position of the engaged storage container 106 is of interest. By way of example, such a sensor 456' could be integrated in the lifting frame 415 and the vertical position of the engaged storage container 106 could be derived from the length of the outstretched fraction of the schematically shown lifting bands 461 extending downwards from the lifting frame 415. The bands 461 are normally connected to a lifting device (not shown). The mass balancing system 450 could comprise a further sensor 456" for determining spatial distribution of a load weight in the interior of a storage container 106 engaged by the vehicle 500. By way of example, said sensor 456" could be integrated in the lifting frame 415 and configured to measure load on the respective lifting bands 461 and this information could subsequently be used to identify a non-uniformly loaded storage container.

In another embodiment (not shown), the mass balancing system 450 could comprise a sensor that measures an angle of tilt on the vehicle 500. In one embodiment, such a sensor could comprise a gyroscope. The angle of tilt on the vehicle 500 could also be determined indirectly, for instance by deriving necessary information from the tension force acting on each of the lifting bands 461 or torque acting on front/rear wheel axis.

Obviously, the more different types of sensors are employed, the more relevant information regarding the engaged storage container 106 i.e. regarding change of center of gravity of the vehicle/container assembly, will be obtained. This information is subsequently used to suitably reposition the center of gravity by displacing the balance weight 452.

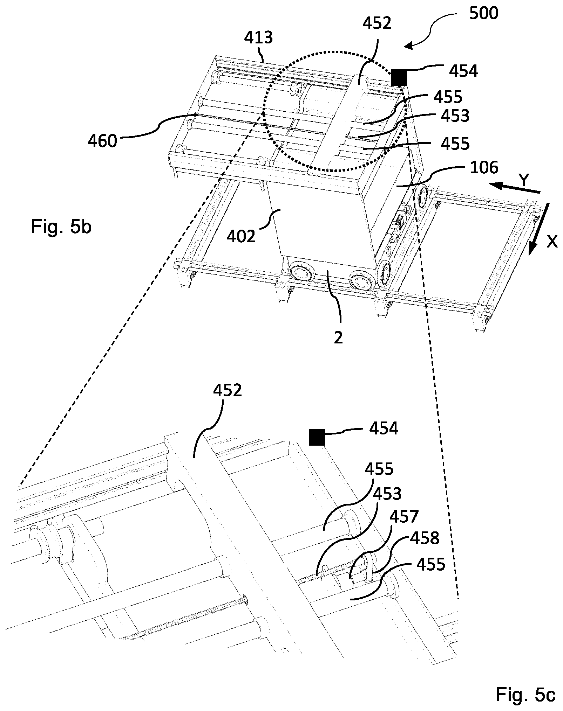

Fig. 5b is a top perspective view of a mass balancing system 450 of Fig. 5a. With reference to Figs. 5a-5b, a balance weight displacing device 453 is guidable in a cantilever section 413 along balance weight guides 455. The balance weight displacing device 453 is in the form of a ball screw in engagement with a threaded bar 460, where rotation of the ball screw is transferred to a linear movement of the balance weight 452 along the bar 460 and the guides 455. Linear displacement of the balance weight 452 is controlled by the control system 454.

Fig. 5c is a detailed view of the encircled area of Fig. 5b and shows more details of the mass balancing system 450 shown in Fig. 5b. In addition to the features described in relation to Figs. 5a-5b, a balance weight displacing device motor 457 driven by a battery or similar (not shown) is shown. A rotational arrangement 458 in the form of a belt transfers rotational movement from the motor 457 to the balance weight displacing device 453. Although a rotational arrangement 458 in the form of a belt which transfers movement to the balance weight displacing device 453 is disclosed, other arrangements are possible provided they perform the required function. Two, parallel balance weight guides 455 are also shown.

General effects and advantages of the invention may also be attributed to the vehicles of Figs. 4a-5c. Still with reference to Figs. 4a-5c, a particular advantage attributable to the vehicle 500 having a cantilever design is improvements in solving problems occurring in connection with vertical motion of the storage container 106 during lifting, such as presence of torque on the cantilever section 413 and possible tipping up of the remotely operated vehicle 500.

Fig. 6 is a perspective view of a remotely operated vehicle 500 having a mass balancing system according to a preferred embodiment of the present invention. In this embodiment, movable storage container supports 550, 550' arranged above the wheeled base 442 serve as balance weights. In addition, the empty/loaded storage container(s) 106 may also be used as a balance weight, either in isolation or together with said corresponding container support 550, 550'. Still with reference to Fig. 6, the center of the vehicle VC is shown not to overlap with the center of the storage container supports SC. Here, and due to its substantially symmetrical construction, the original center of gravity of the vehicle 500 is in the center of the vehicle 500. The storage container supports 550, 550' and the storage containers 106 have been moved in the first direction X, here equal to about 15% of the length of vehicle body along the first direction X, in response to an external event such as loss of wheel traction. Hence, the center of gravity of the vehicle/storage container assembly has been repositioned by moving the supports 550, 550' so that the vehicle/storage container assembly may regain balance. It is equally conceivable to adequately load a storage container 106 in order to compensate for inadvertent changes of center of gravity of the vehicle 500. Further, the vehicle 500 may comprise sensors (not shown) that detect the presence of a storage container 106 on a storage container support 550, 550'. Hence, if no storage container 106 is present, the vehicle 500 can automatically arrange the storage container supports 550, 550' in a position assuring that the footprint of the vehicle 500 is as small as possible. Subsequently, the optimal route across the rail system 108 for the vehicle 500 may be calculated, current footprint of the vehicle 500 being taken into account. General effects and advantages discussed in conjunction with other vehicle types of Figs. 4a-5c may also be attributed to the mass balancing system of Fig. 6.

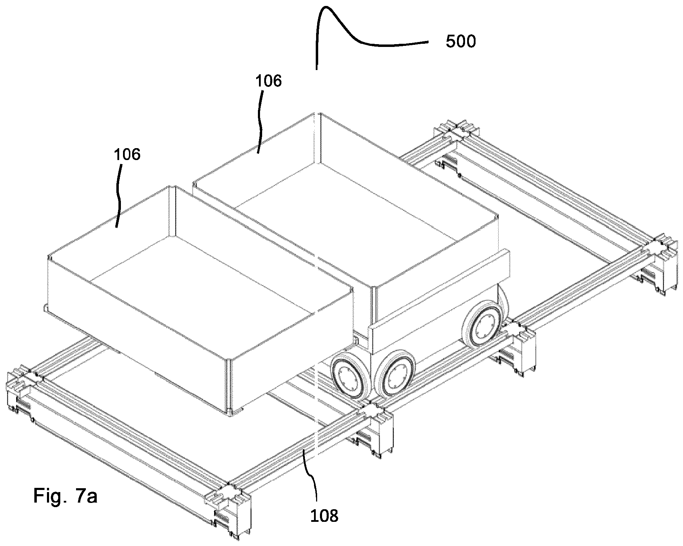

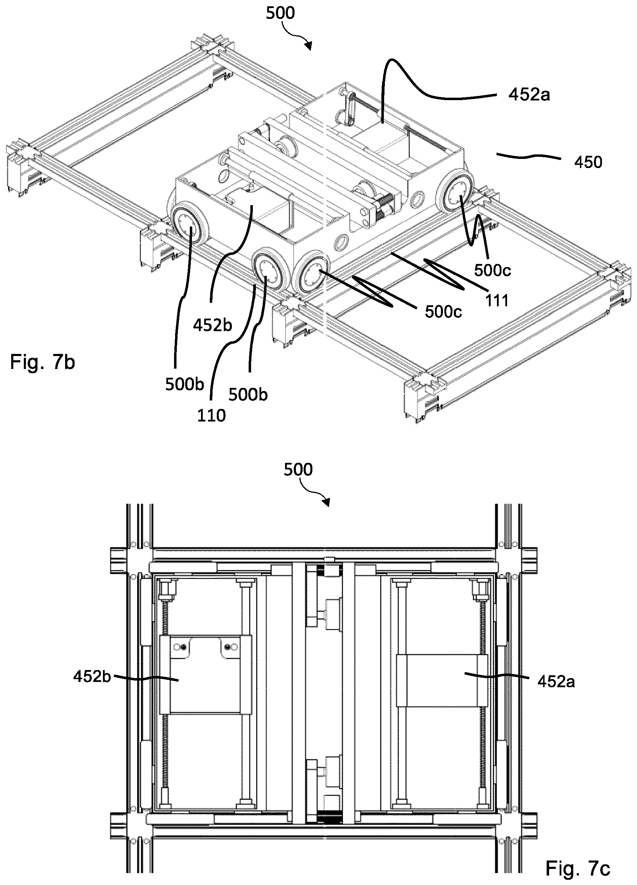

Figs. 7a-7c show an example of a further remotely operated vehicle with a mass balancing system according to a preferred embodiment of the present invention.

More specifically, Fig. 7a is a perspective view of a remotely operated vehicle 500 suitable for handling a storage container 106 on a two-dimensional rail system 108 of an automated storage and retrieval system, such as that shown in Fig. 1. The shown vehicle 500 has an adjustable footprint so as to facilitate its motion across the rail system 108. Storage bins 106 may be super positioned (not shown) in order to reduce the footprint.

Turning to Figs 7b-7c, a mass balancing system 450 in accordance with an embodiment of the invention is shown. The mass balancing system 450 comprises a balance weight 452. In the shown embodiment, the balance weight 452 consists of two weight elements 452a, 452b. The element 452a is a dedicated weight displaceable in a horizontal direction, either in one or two dimensions. The element 452b is also a weight displaceable in a horizontal direction. However, the element 452b is a functional part of the remotely operated vehicle 500 such that said element 452b has an additional function in the remotely operated vehicle 500. Significant space savings are hereby achieved. In the shown embodiment, the element 452b is a battery for storing energy. In one embodiment, the weight of a battery pack suitable for use in a remotely operated vehicle 500 of the invention is approximately 30 kg, but heavier or lighter battery packs may also be envisaged, in dependence of the type of the remotely operated vehicle. In another, related embodiment (not shown), the element 452b is a drive motor for propelling the remotely operated vehicle 500. In an alternative embodiment, an energy-providing capacitor could be used instead of the battery. By physically splitting the balance weight into two parts 452a, 452b, a more accurate system is achieved offering more freedom when it comes to positioning of the balance weight 452. In this embodiment, the balance weight may be entirely provided by a functional part, or be entirely provided by a dedicated part. A first set of wheels 500b for engaging with two adjacent rails of the first set 110 of rails and a second set of wheels 500c for engaging with two adjacent rails of the second set 111 of rails are also shown. With reference to Fig. 1 in connection with Fig. 7b, the remotely operated vehicle 500 always moves along a straight path, a so-called Manhattan path, i.e. the wheels 500b, 500c are not steerable. Moreover, general effects and advantages discussed in conjunction with other vehicle types of Figs. 4a-6 may also be attributed to the mass balancing system of Figs. 7a-7c. For details of transfer of rotational movement to the balance weight displacing device a reference is made to Figs. 4a-5c and thereto corresponding sections of the detailed description.

It is equally conceivable to provide a remotely operated vehicle, wherein a balance weight is displaceable in a vertical direction by means of a hoisting device (not shown). Such an embodiment according to the invention might be particularly useful when it is desired to increase vehicle speed without impacting vehicle stability. To comply with this requirement, the center of gravity (COG; shown in Fig. 4a) of the vehicle or container/vehicle assembly is lowered.

In a related embodiment, the storage container 106 may serve as a balance weight 452, and the adjustment of said center of gravity is done by simply raising/lowering the container 106 by means of the lifting frame discussed in connection with Fig. 4a. Hereby the pre-extant features of the remotely operated vehicle, e.g. lifting frame, obtain new functionality and may be used for vertical adjustment of the center of gravity (COG) of the container/vehicle assembly.

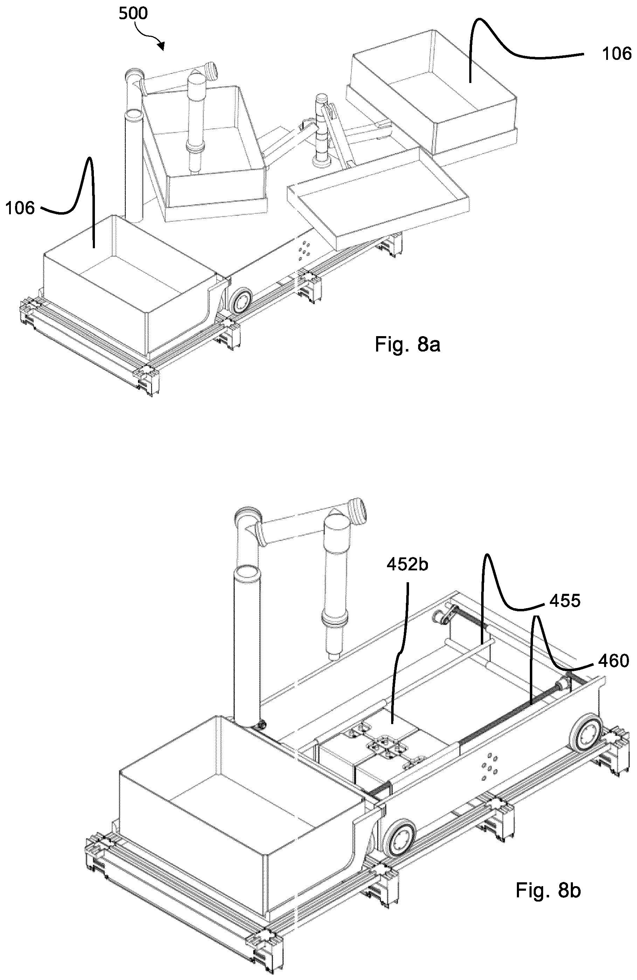

Figs. 8a-8b show an example of a yet another remotely operated vehicle with a mass balancing system according to a preferred embodiment of the present invention.

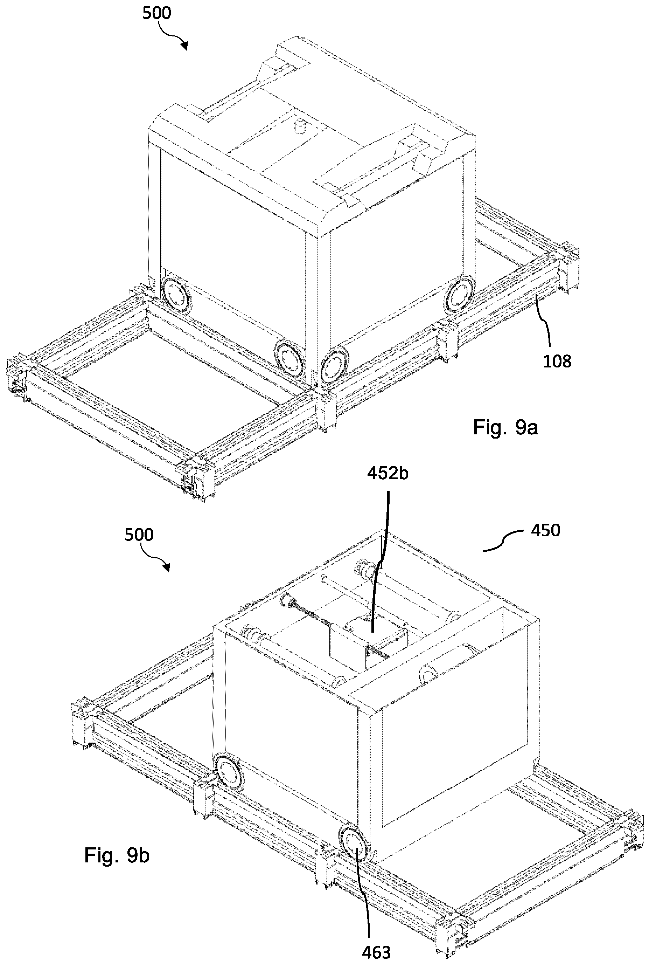

Fig. 8a shows a so-called harvester unit 500 for collecting empty storage bins 106. In a related Fig. 8b, a battery serves as a sole balance weight 452b. As described in conjunction with Fig 5c. a rotational arrangement in the form of a belt transfers rotational movement from the motor to the balance weight displacing device. The balance weight 452b reciprocates along a previously discussed threaded bar 460. Moreover, a balance weight guide 455 is associated with the balance weight 452b. General effects and advantages discussed in conjunction with other vehicle types of Figs. 4a-7c may also be attributed to the mass balancing system of Figs. 8a-8b. Figs. 9a-9b show an example of a remotely operated vehicle 500 with a central cavity (also shown in Fig. 3b) and having a mass balancing system according to a preferred embodiment of the present invention. Fig. 9a is a perspective view of said vehicle 500 when positioned on a rail system 108, whereas Fig. 9b is a perspective view showing parts of a mass balancing system 450. Structural parts and function of the system are similar to those discussed in conjunction with Figs. 4 and 5. More specifically, a battery 452b is used as a single balance weight. General effects and advantages discussed in conjunction with other vehicle types of Figs. 4a-8b may also be attributed to the vehicle having a central cavity of Figs. 9a-9b. A particular advantage attributable to the vehicle having a central cavity is improved distribution of the load associated with the storage container (not visible in Figs 9a-9b) at the wheels 463.

In the preceding description, various aspects of the remotely operated vehicle and the automated storage and retrieval system according to the invention have been described with reference to the illustrative embodiment. For purposes of explanation, specific numbers, systems and configurations were set forth in order to provide a thorough understanding of the system and its workings. However, this description is not intended to be construed in a limiting sense.

### LIST OF REFERENCE NUMBERS

- 1: Storage and retrieval system
- 100: Framework structure
- 102: Upright members of framework structure
- 104: Storage grid
- 105: Storage column
- 106: Storage container
- 106': Particular position of storage container
- 107: Stack of storage containers
- 108: Rail system
- 110: Parallel rails in first direction (*X*)
- 111: Parallel rails in second direction (Y)
- 112: Access opening
- 119: First port column
- 201: Container handling vehicle belonging to prior art
- 201a: Vehicle body of the container handling vehicle 201
- 201b: Drive means / wheel arrangement, first direction (*X*)
- 201c: Drive means / wheel arrangement, second direction (*Y*)
- 301: Cantilever-based container handling vehicle belonging to prior art
- 301a: Vehicle body of the container handling vehicle 301
- 301b: Drive means in first direction (*X*)
- 301c: Drive means in second direction (*Y*)
- 401: Container handling vehicle belonging to prior art
- 401a: Vehicle body of the container handling vehicle 401
- 401b: Drive means in first direction (*X*)
- 401c: Drive means in second direction (*Y*)
- 402: Support section
- 413: Cantilever section
- 415: Lifting frame
- 425: Support surface
- 442: Wheeled base
- 450: Mass balancing system
- 452: Balance weight
- 452a: Dedicated weight
- 452b: Battery weight
- 453: Balance weight displacing device
- 454: Control system
- 455: Balance weight guide
- 456 - 456": Sensor
- 457: Balance weight displacing device motor
- 458: Rotational arrangement
- 460: Threaded bar
- 461: Lifting band
- 463: Wheels
- 500: Remotely operated vehicle
- 500b: First set of wheels
- 500c: Second set of wheels
- 550-550': Storage container support
- X: First direction
- *Y*: Second direction
- *Z*: Third direction

## Claims

1. A remotely operated vehicle (500) for handling a storage container (106) or a further vehicle, said remotely operated vehicle (500) arranged for working on a rail system (108) of an automated storage and retrieval system (1), said rail system (108) overlying upright members (102) and comprising a first set of parallel rails (110) and a second set of parallel rails (111) arranged perpendicular to the first set of parallel rails (110), said remotely operated vehicle (500) comprising a first set of wheels (500b) being arranged to engage with two adjacent rails of the first set (110) of rails and a second set of wheels (500c) being arranged to engage with two adjacent rails of the second set (111) of rails, said vehicle (500) further comprising a mass balancing system (450) comprising a balance weight (452), said mass balancing system (450) being configured to purposely displace the balance weight (452) in order to improve stability of the remotely operated vehicle (500), **characterised in that** the balance weight (452) is displaced in response to a change in position of the vehicle's (500) center of gravity, COG, wherein the balance weight (452) is displaceable in a vertical direction by means of a hoisting device.

2. The remotely operated vehicle (500) of any of the preceding claims, wherein the balance weight (452) is displaceable in a horizontal direction.

3. The remotely operated vehicle (500) of any of the preceding claims, wherein the mass balancing system (450) further comprises one or more of:
a sensor (456) for measuring weight of a storage container (106) engaged by the remotely operated vehicle (500);
a sensor (456') for determining position of a storage container (106) engaged by the remotely operated vehicle (500);
a sensor (456") for determining spatial distribution of a load weight in the interior of a storage container (106) engaged by the remotely operated vehicle (500); and/or
a sensor that measures an angle of tilt on the remotely operated vehicle (500).

4. The remotely operated vehicle (500) of claim 3, wherein the mass balancing system (450) comprises a control system (454) connected to sensors (456, 456', 456"), the sensor that measures an angle of tilt and a balance weight displacing device (453), wherein the control system (454), based on data obtained from the sensors (456, 456', 456"), calculates a new position for the balance weight (452), and instructs the balance weight displacing device (453) to displace the balance weight (452) to said new position.

5. The remotely operated vehicle (500) of claim 4, wherein the displacement cycle of the balance weight (452) is at least in part predetermined in order to counter known future changes associated with the remotely operated vehicle (500).

6. The remotely operated vehicle (500) of any of the preceding claims, wherein the balance weight (452) is at least one functional part of the remotely operated vehicle (500) such that said balance weight has an additional function in the remotely operated vehicle (500).

7. The remotely operated vehicle (500) of claim 6, wherein the balance weight (452) of the remotely operated vehicle (500) is a battery for storing energy or a motor for propelling the remotely operated vehicle (500).

8. The remotely operated vehicle (500) of any of the preceding claims, wherein the balance weight (452) displaces linearly, and optionally wherein the mass balancing system (450) comprises at least one balance weight guide (455) associated with each balance weight (452) and optionally the balance weight (452) reciprocates along a threaded bar.

9. The remotely operated vehicle (500) of any of the preceding claims, wherein the remotely operated vehicle (500) is of cantilever type or the remotely operated vehicle (500) is of internal cavity type.

10. The remotely operated vehicle (500) of any of the preceding claims, wherein the remotely operated vehicle (500) comprises an upper section where the mass balancing system (450) is located.

11. The remotely operated vehicle (500) of any of the preceding claims, wherein the remotely operated vehicle (500) comprises a support surface (425) displaceable in a horizontal direction, and/or the remotely operated vehicle (500) has an adjustable footprint.

12. The remotely operated vehicle (500) of any of the preceding claims, wherein the remotely operated vehicle (500) is a service vehicle for moving the further vehicle when said further vehicle is out of order.

13. A method for operating a remotely operated vehicle (500) having a mass balancing system (450) comprising a balance weight (452), said remotely operated vehicle (500) for handling a storage container (106) or a further vehicle on a two-dimensional rail system (108) of an automated storage and retrieval system (1), said rail system (108) overlying upright members (102) and comprising a first set of parallel rails (110) and a second set of parallel rails (111) arranged perpendicular to the first set of parallel rails (110), said remotely operated vehicle (500) comprising a first set of wheels (500b) being arranged to engage with two adjacent rails of the first set (110) of rails and a second set of wheels (500c) being arranged to engage with two adjacent rails of the second set (111) of rails, the method comprising:
- purposely displacing the balance weight (452) in a vertical direction by means of a hoisting device in response to a change of vehicle's (500) center of gravity (COG) in order to improve stability of the remotely operated vehicle (500).

14. The method of claim 13, wherein the mass balancing system (450) of the remotely operated vehicle (500) further comprises a balance weight displacing device (453) and the method further comprises one or more of:
- measuring a weight of a storage container (106) engaged by the remotely operated vehicle (500),
- based on obtained weight data, calculating a new position for the balance weight (452) with respect to the remotely operated vehicle (500), and
- instructing the balance weight displacing device (453) to displace the balance weight (452) to said new position;
- determining a position of a storage container (106) engaged by the remotely operated vehicle (500), - based on obtained position data, calculating a new position for the balance weight (452) with respect to the remotely operated vehicle (500), and
- instructing the balance weight displacing device (453) to displace the balance weight (452) to said new position; and
- determining a spatial distribution of a load weight in the interior of a storage container (106) engaged by the remotely operated vehicle (500),
- based on obtained spatial distribution data, calculating a new position for the balance weight (452) with respect to the remotely operated vehicle (500), and
- instructing the balance weight displacing device (453) to displace the balance weight (452) to said new position.

## Patentansprüche

1. Ferngesteuertes Fahrzeug (500) zum Handhaben eines Lagerbehälters (106) oder eines weiteren Fahrzeugs, wobei das ferngesteuerte Fahrzeug (500) zum Arbeiten auf einem Schienensystem (108) eines automatisierten Ein- und Auslagersystems (1) angeordnet ist, wobei das Schienensystem (108) aufrechte Elemente (102) überlagert und einen ersten Satz parallele Schienen (110) und einen zweiten Satz parallele Schienen (111), die senkrecht zu dem ersten Satz parallele Schienen (110) angeordnet sind, umfasst, wobei das ferngesteuerte Fahrzeug (500) einen ersten Satz Räder (500b) umfasst, die dazu angeordnet sind, mit zwei benachbarten Schienen des ersten Satzes (110) Schienen in Eingriff zu gelangen, und einen zweiten Satz Räder (500c), die dazu angeordnet sind, mit zwei benachbarten Schienen des zweiten Satzes (111) Schienen in Eingriff zu gelangen, wobei das Fahrzeug (500) ferner ein Massenausgleichssystem (450) umfasst, das ein Ausgleichsgewicht (452) umfasst, wobei das Massenausgleichssystem (450) dazu ausgelegt ist, das Ausgleichsgewicht (452) gezielt zu verlagern, um die Stabilität des ferngesteuerten Fahrzeugs (500) zu verbessern, **dadurch gekennzeichnet, dass** das Ausgleichsgewicht (452) bei einer Lageänderung des Schwerpunkts des Fahrzeugs (500) verlagert wird, wobei das Ausgleichsgewicht (452) mittels einer Hubvorrichtung in vertikaler Richtung verlagerbar ist.

2. Ferngesteuertes Fahrzeug (500) nach einem der vorhergehenden Ansprüche, wobei das Ausgleichsgewicht (452) in einer horizontalen Richtung verlagerbar ist.

3. Ferngesteuertes Fahrzeug (500) nach einem der vorhergehenden Ansprüche, wobei das Massenausgleichssystem (450) ferner eines oder mehrere der folgenden Elemente umfasst:
einen Sensor (456) zum Messen des Gewichts eines Lagerbehälters (106), der von dem ferngesteuerten Fahrzeug (500) in Eingriff gebracht wird;
einen Sensor (456') zum Bestimmen der Position eines Lagerbehälters (106), der von dem ferngesteuerten Fahrzeug (500) in Eingriff gebracht wird;
einen Sensor (456") zum Bestimmen der räumlichen Verteilung eines Lastgewichts im Inneren eines Lagerbehälters (106), der von dem ferngesteuerten Fahrzeug (500) in Eingriff gebracht wird; und/oder einen Sensor, der einen Neigungswinkel am ferngesteuerten Fahrzeug (500) misst.

4. Ferngesteuertes Fahrzeug (500) nach Anspruch 3, wobei das Massenausgleichssystem (450) ein Steuersystem (454) umfasst, das mit Sensoren (456, 456', 456"), dem einen Neigungswinkel messenden Sensor und einer Ausgleichsgewichtsverlagerungsvorrichtung (453) verbunden ist, wobei das Steuersystem (454), basierend auf von den Sensoren (456, 456', 456") erhaltenen Daten, eine neue Position für das Ausgleichsgewicht (452) berechnet und die Ausgleichsgewichtsverlagerungsvorrichtung (453) anweist, das Ausgleichsgewicht (452) in die neue Position zu verlagern.

5. Ferngesteuertes Fahrzeug (500) nach Anspruch 4, wobei der Verlagerungszyklus des Ausgleichsgewichts (452) zumindest teilweise vorbestimmt ist, um dem ferngesteuerten Fahrzeug (500) zugeordneten bekannten zukünftigen Änderungen entgegenzuwirken.

6. Ferngesteuertes Fahrzeug (500) nach einem der vorhergehenden Ansprüche, wobei das Ausgleichsgewicht (452) zumindest ein funktionaler Teil des ferngesteuerten Fahrzeugs (500) ist, so dass das Ausgleichsgewicht eine zusätzliche Funktion in dem ferngesteuerten Fahrzeug (500) aufweist.

7. Ferngesteuertes Fahrzeug (500) nach Anspruch 6, wobei das Ausgleichsgewicht (452) des ferngesteuerten Fahrzeugs (500) eine Batterie zum Speichern von Energie oder ein Motor zum Antreiben des ferngesteuerten Fahrzeugs (500) ist.

8. Ferngesteuertes Fahrzeug (500) nach einem der vorhergehenden Ansprüche, wobei sich das Ausgleichsgewicht (452) linear verlagert und wobei optional das Massenausgleichssystem (450) mindestens eine jedem Ausgleichsgewicht (452) zugeordnete Ausgleichsgewichtsführung (455) umfasst und sich optional das Ausgleichsgewicht (452) entlang einer Gewindestange hin- und herbewegt.

9. Ferngesteuertes Fahrzeug (500) nach einem der vorhergehenden Ansprüche, wobei das ferngesteuerte Fahrzeug (500) vom Auslegertyp ist oder das ferngesteuerte Fahrzeug (500) vom Innenhohlraumtyp ist.

10. Ferngesteuertes Fahrzeug (500) nach einem der vorhergehenden Ansprüche, wobei das ferngesteuerte Fahrzeug (500) einen oberen Abschnitt umfasst, in dem sich das Massenausgleichssystem (450) befindet.

11. Ferngesteuertes Fahrzeug (500) nach einem der vorhergehenden Ansprüche, wobei das ferngesteuerte Fahrzeug (500) eine Auflagefläche (425) umfasst, die in einer horizontalen Richtung verlagerbar ist, und/oder das ferngesteuerte Fahrzeug (500) eine einstellbare Grundfläche aufweist.

12. Ferngesteuertes Fahrzeug (500) nach einem der vorhergehenden Ansprüche, wobei das ferngesteuerte Fahrzeug (500) ein Wartungsfahrzeug zum Bewegen des weiteren Fahrzeugs ist, wenn das weitere Fahrzeug außer Betrieb ist.

13. Verfahren zum Betreiben eines ferngesteuerten Fahrzeugs (500) mit einem Massenausgleichssystem (450), das ein Ausgleichsgewicht (452) umfasst, wobei das ferngesteuerte Fahrzeug (500) zum Handhaben eines Lagerbehälters (106) oder eines weiteren Fahrzeugs auf einem zweidimensionalen Schienensystem (108) eines automatisierten Ein- und Auslagersystems (1) dient, wobei das Schienensystem (108) aufrechte Elemente (102) überlagert und einen ersten Satz parallele Schienen (110) und einen zweiten Satz parallele Schienen (111), die senkrecht zu dem ersten Satz parallele Schienen (110) angeordnet sind, umfasst, wobei das ferngesteuerte Fahrzeug (500) einen ersten Satz Räder (500b) umfasst, die dazu angeordnet sind, mit zwei benachbarten Schienen des ersten Satzes (110) Schienen in Eingriff zu gelangen, und einen zweiten Satz Räder (500c), die dazu angeordnet sind, mit zwei benachbarten Schienen des zweiten Satzes (111) Schienen in Eingriff zu gelangen, wobei das Verfahren Folgendes umfasst:
- gezieltes Verlagern des Ausgleichsgewichts (452) in vertikaler Richtung mittels einer Hubvorrichtung bei einer Änderung des Schwerpunkts des Fahrzeugs (500), um die Stabilität des ferngesteuerten Fahrzeugs (500) zu verbessern.

14. Verfahren nach Anspruch 13, wobei das Massenausgleichssystem (450) des ferngesteuerten Fahrzeugs (500) ferner eine Ausgleichsgewichtsverlagerungsvorrichtung (453) umfasst und das Verfahren ferner einen oder mehrere der folgenden Schritte umfasst:
- Messen des Gewichts eines Lagerbehälters (106), der von dem ferngesteuerten Fahrzeug (500) in Eingriff gebracht wird;
- Berechnen einer neuen Position für das Ausgleichsgewicht (452) in Bezug auf das ferngesteuerte Fahrzeug (500) auf der Grundlage der erhaltenen Gewichtsdaten und
- Anweisen der Ausgleichsgewichtsverlagerungsvorrichtung (453), das Ausgleichsgewicht (452) in die neue Position zu verlagern;
- Bestimmen einer Position eines Lagerbehälters (106), der von dem ferngesteuerten Fahrzeug (500) in Eingriff gebracht wird, -Berechnen einer neuen Position für das Ausgleichsgewicht (452) in Bezug auf das ferngesteuerte Fahrzeug (500) auf der Grundlage der erhaltenen Positionsdaten und
- Anweisen der Ausgleichsgewichtsverlagerungsvorrichtung (453), das Ausgleichsgewicht (452) in die neue Position zu verlagern; und
- Bestimmen der räumlichen Verteilung eines Lastgewichts im Inneren eines Lagerbehälters (106), der von dem ferngesteuerten Fahrzeug (500) in Eingriff gebracht wird,
- Berechnen einer neuen Position für das Ausgleichsgewicht (452) in Bezug auf das ferngesteuerte Fahrzeug (500) auf der Grundlage der erhaltenen räumlichen Verteilungsdaten und
- Anweisen der Ausgleichsgewichtsverlagerungsvorrichtung (453), das Ausgleichsgewicht (452) in die neue Position zu verlagern.

## Revendications

1. Véhicule piloté à distance (500) pour manipuler un réceptacle d'entreposage (106) ou manœuvrer un autre véhicule, ledit véhicule piloté à distance (500) étant conçu pour opérer sur un système de rails (108) d'un système entreposage et de prélèvement automatisé (1), ledit système de rails (108) recouvrant des montants (102) et comprenant un premier ensemble de rails parallèles (110) et un second ensemble de rails parallèles (111) disposés perpendiculairement au premier ensemble de rails parallèles (110), ledit véhicule piloté à distance (500) comprenant un premier jeu de roues (500b) conçu pour coopérer avec deux rails adjacents du premier ensemble de rails (110) et un second jeu de roues (500c) conçu pour coopérer avec deux rails adjacents du second ensemble de rails (111), ledit véhicule (500) comprenant en outre un système d'équilibrage de masse (450) comprenant une masse d'équilibrage (452), ledit système d'équilibrage de masse (450) étant configuré pour déplacer délibérément la masse d'équilibrage (452) afin d'améliorer la stabilité du véhicule piloté à distance (500), **caractérisé en ce que**
la masse d'équilibrage (452) est déplacée en réponse à un changement de position du centre de gravité, CDG, du véhicule (500), la masse d'équilibrage (452) pouvant être déplacée dans une direction verticale au moyen d'un dispositif de levage.

2. Véhicule piloté à distance (500) selon l'une quelconque des revendications précédentes, dans lequel la masse d'équilibrage (452) est déplaçable dans une direction horizontale.

3. Véhicule piloté à distance (500) selon l'une quelconque des revendications précédentes, dans lequel le système d'équilibrage de masse (450) comprend en outre un ou plusieurs des éléments suivants :
un capteur (456) servant à mesurer le poids d'un réceptacle d'entreposage (106) en prise avec le véhicule piloté à distance (500) ;
un capteur (456') servant à déterminer une position d'un réceptacle d'entreposage (106) en prise avec le véhicule piloté à distance (500) ;
un capteur (456") servant à déterminer la répartition spatiale d'un poids de charge à l'intérieur d'un réceptacle d'entreposage (106) en prise avec le véhicule piloté à distance (500) ; et/ou
un capteur servant à mesurer un angle d'inclinaison sur le véhicule piloté à distance (500).

4. Véhicule piloté à distance (500) selon la revendication 3, dans lequel le système d'équilibrage de masse (450) comprend un système de commande (454) relié aux capteurs (456, 456', 456"), au capteur qui mesure un angle d'inclinaison et à un dispositif de déplacement de masse d'équilibrage (453), dans lequel le système de commande (454), sur la base de données obtenues des capteurs (456, 456', 456"), calcule une nouvelle position pour la masse d'équilibrage (452), et ordonne au dispositif de déplacement de masse d'équilibrage (453) de déplacer la masse d'équilibrage (452) jusqu'à ladite nouvelle position.

5. Véhicule piloté à distance (500) selon la revendication 4, dans lequel le cycle de déplacement de la masse d'équilibrage (452) est au moins en partie prédéterminé afin de neutraliser des changements à venir connus associés au véhicule piloté à distance (500).

6. Véhicule piloté à distance (500) selon l'une quelconque des revendications précédentes, dans lequel la masse d'équilibrage (452) est au moins une partie fonctionnelle du véhicule piloté à distance (500) de sorte que ladite masse d'équilibrage a une fonction supplémentaire dans le véhicule piloté à distance (500).

7. Véhicule piloté à distance (500) selon la revendication 6, dans lequel la masse d'équilibrage (452) du véhicule piloté à distance (500) est une batterie pour emmagasiner de l'énergie ou un moteur pour propulser le véhicule piloté à distance (500).

8. Véhicule piloté à distance (500) selon l'une quelconque des revendications précédentes, dans lequel la masse d'équilibrage (452) se déplace linéairement, et facultativement dans lequel le système d'équilibrage de masse (450) comprend au moins un guide de masse d'équilibrage (455) associé à chaque masse d'équilibrage (452) et facultativement la masse d'équilibrage (452) va et vient le long d'une barre filetée.

9. Véhicule piloté à distance (500) selon l'une quelconque des revendications précédentes, dans lequel le véhicule piloté à distance (500) est du type en porte-à-faux ou le véhicule piloté à distance (500) est du type à cavité interne.

10. Véhicule piloté à distance (500) selon l'une quelconque des revendications précédentes, le véhicule piloté à distance (500) comprenant une section supérieure où est situé le système d'équilibrage de masse (450).

11. Véhicule piloté à distance (500) selon l'une quelconque des revendications précédentes, le véhicule piloté à distance (500) comprenant une surface de support (425) déplaçable dans une direction horizontale, et/ou le véhicule piloté à distance (500) ayant un encombrement ajustable.

12. Véhicule piloté à distance (500) selon l'une quelconque des revendications précédentes, le véhicule piloté à distance (500) étant un véhicule de service pour déplacer l'autre véhicule lorsque ledit autre véhicule est hors service.

13. Procédé de mise en œuvre d'un véhicule piloté à distance (500) comportant un système d'équilibrage de masse (450) comprenant une masse d'équilibrage (452), ledit véhicule piloté à distance (500) étant destiné à manipuler un réceptacle d'entreposage (106) ou manœuvrer un autre véhicule sur un système de rails (108) bidimensionnel d'un système entreposage et de prélèvement automatisé (1), ledit système de rails (108) recouvrant des montants (102) et comprenant un premier ensemble de rails parallèles (110) et un second ensemble de rails parallèles (111) disposés perpendiculairement au premier ensemble de rails parallèles (110), ledit véhicule piloté à distance (500) comprenant un premier jeu de roues (500b) conçu pour coopérer avec deux rails adjacents du premier ensemble de rails (110) et un second jeu de roues (500c) conçu pour coopérer avec deux rails adjacents du second ensemble de rails (111), le procédé comprenant :
- déplacer délibérément la masse d'équilibrage (452) dans une direction verticale au moyen d'un dispositif de levage en réponse à un changement du centre de gravité (CDG) du véhicule (500) afin d'améliorer la stabilité du véhicule piloté à distance (500).

14. Procédé selon la revendication 13, dans lequel le système d'équilibrage de masse (450) du véhicule piloté à distance (500) comprend en outre un dispositif de déplacement de masse d'équilibrage (453) et le procédé comprenant en outre un ou plusieurs des processus suivants :
- mesurer le poids d'un réceptacle d'entreposage (106) en prise avec le véhicule piloté à distance (500),
- sur la base de données de poids obtenues, calculer une nouvelle position pour la masse d'équilibre (452) par rapport au véhicule piloté à distance (500) et
- ordonner au dispositif de déplacement de masse d'équilibrage (453) de déplacer la masse d'équilibrage (452) jusqu'à ladite nouvelle position ;
- déterminer une position d'un réceptacle d'entreposage (106) en prise avec le véhicule piloté à distance (500), - sur la base de données de position obtenues, calculer une nouvelle position pour la masse d'équilibrage (452) par rapport au véhicule piloté à distance (500) et
- ordonner au dispositif de déplacement de masse d'équilibrage (453) de déplacer la masse d'équilibrage (452) jusqu'à ladite nouvelle position ; et
- déterminer la répartition spatiale d'un poids de charge à l'intérieur d'un réceptacle d'entreposage (106) en prise avec le véhicule piloté à distance (500),
- sur la base de données de répartition spatiale obtenues, calculer une nouvelle position pour la masse d'équilibre (452) par rapport au véhicule piloté à distance (500) et
- ordonner au dispositif de déplacement de masse d'équilibrage (453) de déplacer la masse d'équilibrage (452) jusqu'à ladite nouvelle position.
